Europäisches Patentamt

(19) European Patent Office

Office européen des brevets

(11) Publication number : **0 357 153 B1**

(12) **EUROPEAN PATENT SPECIFICATION**

(45) Date of publication of patent specification :
15.01.92 Bulletin 92/03

(51) Int. Cl.⁵ : **A01M 7/00**

(21) Application number : **89202216.1**

(22) Date of filing : **31.08.89**

(54) **Mobile device for spraying plants in the field.**

(30) Priority : **01.09.88 NL 8802164**

(43) Date of publication of application :
**07.03.90 Bulletin 90/10**

(45) Publication of the grant of the patent :
**15.01.92 Bulletin 92/03**

(84) Designated Contracting States :
**AT BE CH DE ES FR GB GR IT LI LU NL SE**

(56) References cited :
**DE-A- 3 316 110**
**DE-U- 8 416 938**
**FR-A- 2 501 461**
**FR-A- 2 606 672**
**GB-A- 2 157 935**

(73) Proprietor : **INSTITUUT VOOR MECHANISATIE ARBEID EN GEBOUWEN**
**Mansholtlaan 10-12**
**NL-6708 PA Wageningen (NL)**

(72) Inventor : **van de Werken, Johannes**
**Gruttoweide 76**
**NL-6708 BK Wageningen (NL)**

(74) Representative : **de Bruijn, Leendert C. et al**
**Nederlandsch Octrooibureau**
**Scheveningseweg 82 P.O. Box 29720**
**NL-2502 LS 's-Gravenhage (NL)**

Jouve, 18, rue Saint-Denis, 75001 PARIS

## Description

The invention relates to a mobile device for spraying plants in the field, having, on a carrier device which can be moved through between rows of plants or along a strip of plants, a fan, connecting to a pipe system to blow air towards the plants in one or more exits of the pipe system positioned close to spray means for spraying the plants.

Such a device is known from DE-U-8416938. It shows a fan blowing through a duct in a tank for spraying liquid and sucking air from the front of the device so remote from the exits of air positioned near the spray means that it is prevented that the fan sucks in air laden with droplets from the spray means.

The object of the invention is to improve such a device so that optimal utilisation of spray product is combined with minimal harm to operating persons in the area in view of the often toxic nature of the spray liquid.

To this end, a device as given in the preamble is, according to the present invention, characterised in that the carrier device also carries a tent-shaped casing having a roof and side walls depending therefrom along edges of the roof extending in the direction of travel of the device, which casing covers the plants to be sprayed and substantially shuts off the space inside said casing from the environment, said fan extracting air from the inside of the casing and through the pipe system, blowing it back into the casing near the spray means.

Through the casing and the extracting action of the fan, as little air as possible with atomized spray product comes out of the device with atomized spray, and spray product present in the extracted air is fed back to the plants.

In particular, when the air inside the casing relative thereto can be expected to flow mainly in one direction relative to the direction of forward movement, for example backwards by a relatively high speed of forward movement, it is advisable to fit the spray means nearer to one end of the casing and to make the fan extract air from a zone near the other end of the casing, normally the rear end, viewed in the direction of movement. Also for treating low plants such a longitudinal distance between spray means and air extracting zone is advantageous.

In other cases it is advisable to make the fan extract from approximately the longitudinal centre of the casing. This is also most often advantageous if the device has two opposite directions of travel while spraying. For the spraying of trees in particular it may be useful to fit the spray nozzles practically in a single transverse plane at right angles to the direction of forward movement, as known per se, and the fan can then advantageously lie centred above them.

It is remarked that tent-shaped casings as applied with the invention are known as such, e.g. from FR-A-2.501.461, FR-A-2.606.672 and GB-A-2.157.935. In the first one of these publications, Fig. 4, the vertical front and back surfaces of the casing as seen in the direction of travel of the device may be closed from the environment by air screens. In said second FR-A, such front and back surfaces are fully open. In said GB-A air is allowed to enter into the casing below movable flaps forming the front surface of the casing and is guided in the casing so as to be redirected downwardly onto the plants being sprayed from above before leaving the casing at the back surface, again below movable flaps.

Both said DE-U-8416938 and DE-A-3316110 show air exits close to spray nozzles to assist spraying, a.o. with air exiting along both sides of spray nozzles.

The invention also relates to a further development of the above-mentioned features, as yet to be described.

The invention will now be explained in greater detail with reference to the appended drawings. In them :

Fig. 1 is a side view of a device according to the invention in a preferred embodiment for the spraying of trees ;

Fig. 2 is a vertical cross-section thereof along the line II-II in Fig. 1 ;

Fig. 3 is a partial section along the line III-III in Fig. 2 ;

Fig. 4 is a cross-section of a preferred embodiment for spraying low crops, along the line IV-IV in Fig. 5 ; and

Fig. 5 is a longitudinal section through said device along the line V-V in Fig. 4.

Fig. 6 is a more diagrammatic horizontal section of another embodiment of the device for spraying higher plants, shrubs or trees

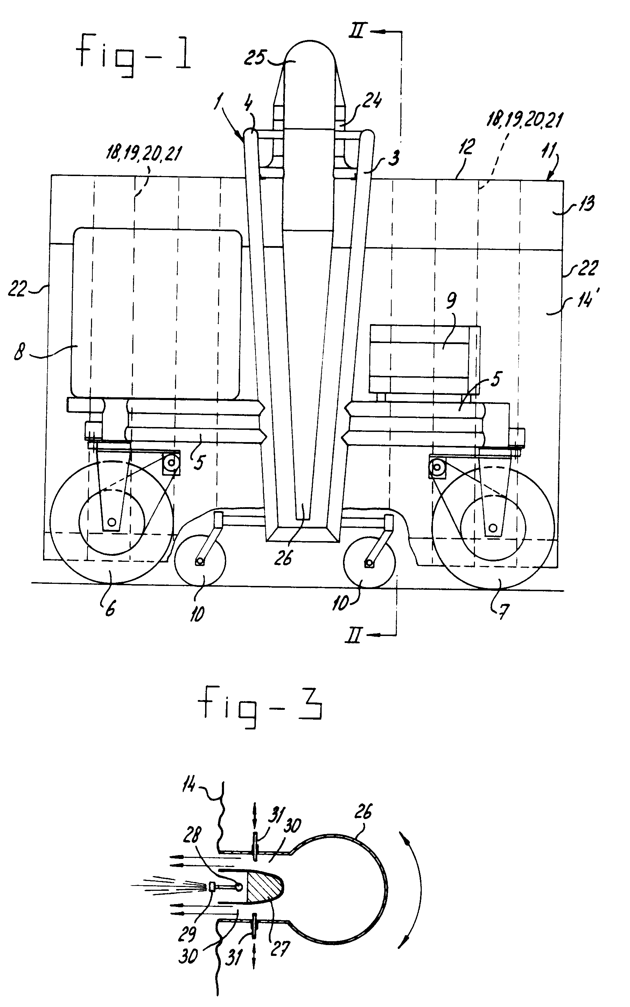

The device according to Figs. 1-3 has a rigid gantry structure 1 with upright legs 2 and 3 and a horizontal top leg 4. On horizontal arms 5 on leg 2 this gantry structure carries swivelling and drivable wheels 6 and 7, a stock tank 8 for spray product, and a drive unit 9 for said wheels. Leg 3 bears two non-driven and freely swivellable piano wheels 10 at the bottom.

A tent-shaped casing 11, which can have a bar-type or tubular frame (not shown) over which, for example, canvas is stretched, is suspended in this gantry. The casing 11 has a flat top wall 12 in the centre, merging towards both sides into downward-sloping parts 13, which in turn merge into more steeply downward-sloping side wall parts 14, at the bottom along the entire bottom edge merging into flat parts 15 sloping slightly towards the centre, and each ending in a channel 16. This shape is such that the trees 17 of a row of trees to be sprayed are well enclosed.

At the wheels 6 and 7 the frame of the casing is made flexible, for example through rubber parts therein, in order to permit the wheels to swivel and to press the casing temporarily inwards in the process. The side wall parts 14 at those wheels may also extend more vertically, in order to leave more space between them and the wheels 6 and 7 and their bearing elements.

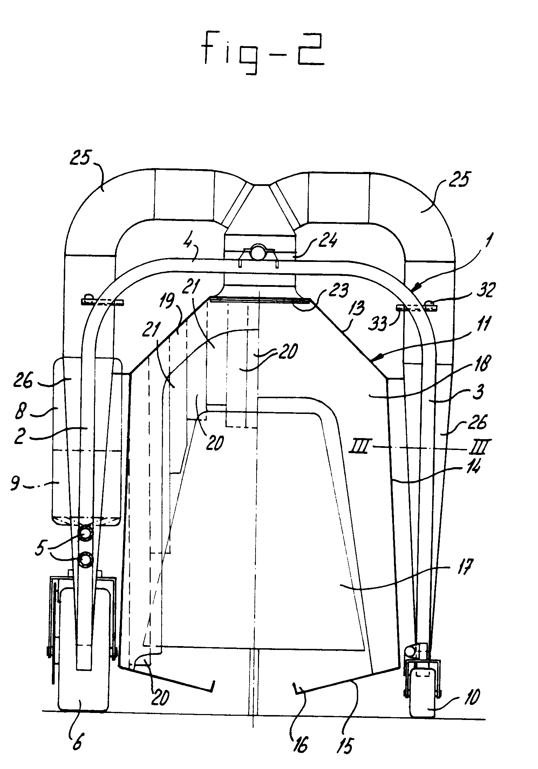

Located inside said casing are flaps, for example of rubber or canvas, which serve to keep in the air inside the casing and allow as little air as possible in from the outside. These flaps can be in different forms. Shown on the right in Fig. 2 is a flap 18 which just allows the trees 17 through without touching. Shown on the left in Fig. 2 is a flap 19 which leaves more space between casing and tree, but is touched at the bottom by the trees and pressed away as it passes. Individual strip-type flaps can also hang next to each other in the casing and do touch the trees (flaps 20) or just miss them (flaps 21). The flaps 20 touching the trees can also be longer. The flaps may be easily removable to replace them by other flaps depending on the shape of the trees or the stage of development of foliage of the same trees.

In Fig. 1 vertical dashed lines indicate how these flaps can be placed one after the other in the lengthwise direction of the device, of course apart from flaps which are disposed in the end faces 22 of the casing. In this example flaps are disposed at equal intervals, viewed in the direction of travel of the device, but only on either side of the gantry legs 2 and 3, and thus not in the centre lengthwise, where spray means yet to be described are fitted. It is preferable for flaps in and closer to said end faces 22 to seal off the transverse space in the casing 11 more than flaps lying more towards the centre of the casing. In said end faces 22 long individual strip-type flaps next to each other and touching the trees are particularly suitable.

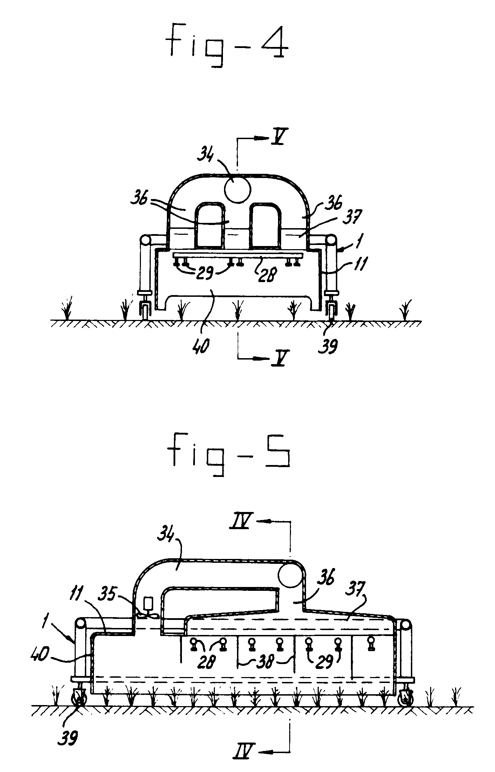

In the top centre of the casing 11 is an aperture 23, connecting to a fan housing 24, with a driven fan which extracts air through said aperture out of the casing and discharges it through and divided between two pipes 25, each of which merges into a pipe 26 which leads downwards along the casing, and which narrows downwards and has along the steep wall parts 14 of the casing a long discharge slit for delivering said air back into the casing. Fig. 3 shows how said slit can be fairly wide, with a screen 27 in the centre thereof, in the shadow of which lies a pipe 28 for liquid spray product, on which a number of spray nozzles 29 are fitted. The air delivery slit is thus divided into two fairly narrow slits 30 along each side of the screen 27, which can each be narrowed or completely closed with a slide 31 through direct or remote control, and manually or mechanically. The flows of air directly along the liquid jets out of the spray nozzles 29 help the liquid in said jets to remain directed well onto the trees.

The pipes 26 are swivellable about their vertical axes in both directions through a limited angle, say 40°, for example through a motor engaging with a pinion 32, which meshes with a gear ring 33 along part of the periphery of each pipe 26. If the casing is locally flexible enough in the walls 14, it can connect directly to the outside walls of the slits 30, as shown in Fig. 3, in which case so much space, for example through folds or corrugations, as shown, in the canvas or the like of the wall parts 14 is present that it can follow said swivelling.

When the device is travelling with the legs 2 and 3 of the gantry through between rows of trees the casing 11 encloses in succession the trees in a row to be sprayed, and the trees are sprayed when they are completely inside the casing. It was found that it is better not to spray the trees with jets essentially at right angles to the direction of forward movement of the device, but with jets which are directed at an angle relative to said direction. This was done until now by directing the spray nozzles 29 backwards relative to the direction of travel. It has now been found that trees can be sprayed more efficiently — i.e. with fuller use of the spray liquid, thus with lower consumption thereof — if spraying takes place in the forward direction. If the device can travel in two opposite directions over the trees, this means that it must be possible to swivel the spray nozzles 29 relative to the position of Fig. 3 in both directions through the same angle. In addition, a finer adjustment of said swivel angle is, of course, possible.

The flat bottom parts 15 of the casing serve to collect a large part of the spray liquid which has not touched the trees, or drips quickly off them, and to convey it to the channels 16, from where this liquid can be conveyed back through pipes and by pump or other pressure difference means (not shown) into the spraying system, e.g. into stock tank 8.

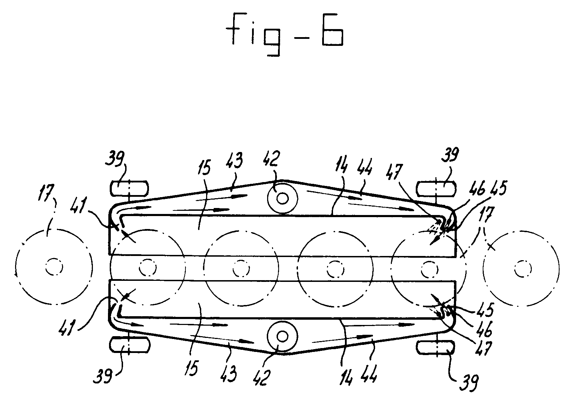

Figs. 4 and 5 show schematically a device according to the invention for spraying low crops, it being assumed that it is sufficient to spray these only from the top. A long, low gantry structure 1 with wheels 39, for example, swivelling wheels, bears a casing 11, which in this case simultaneously spans a number of rows of plants (here three rows, Fig. 4) and a number of plants per row, and if desired is here also made of flexible material such as canvas with a rigid frame, suspended on bars from the gantry 1. The casing can have a closed front and rear wall 40, according to Fig. 4 with a bottom edge which just allows through the plants (or just touches them without damaging them).

Pipes 28 for spray liquid, with a number of nozzles 29 in a row on each pipe, run along the bottom of the top wall of the casing at right angles to the direction of travel. Said spray nozzles 29 can be distributed uniformly over the length of the pipes 28, or can be concentrated above the rows of plants as shown. In the direction of travel, some distance away from said spray nozzles 29, a pipe 34 connects to one or more apertures in the top of the casing 11, and therein is a fan 35 which extracts air from the casing.

The pipe 34 here splits up into three pipes 36, each leading to an air chamber 37, which extends in the lengthwise direction over the spray nozzles 29 above one row of plants, and connects to apertures in the top wall of the casing, in order thus to blow the air drawn in by fan 35 downwards along the spray nozzles underneath. All apertures in the casing for allowing through air can have grilles and/or slides or the like for varying their air passage surface. Unless the device can be built very low, with the spray nozzles 29 and the air inlets very close above the plants, it is advisable here also to fit transverse flaps 38 which here can have over the entire width of the casing a horizontal bottom edge which, for example for flaps further from the extraction aperture of fan 35, lies lower than for flaps closer to it, in order to obtain a uniform air flow through underneath to the fan (Fig. 5).

It can be advantageous also when spraying trees to extract in a different transverse plane, viewed in the direction of movement, from that where the air is returned, for example in view of the slanting direction of spraying and the influence of the forward movement of the device on the air in, to and from the casing, so that in the embodiment of Figs. 1-3 then the extraction aperture 23 comes to lie in a different transverse plane from the air-delivering pipes 26.

Fig. 6 shows another embodiment of the device according to the invention, where there is also quite a distance in the direction of travel between the zone of extracting air from the casing and the zone of blowing thereof into the casing, particularly suited for trees, shrubs and higher plants. The air is sucked from the interior of the casing, of which the vertical side walls 14 are shown, through a substantially vertical slot 41 at one end by a fan 42, which in this case is embodied as a cross-flow fan with a vertical rotor, through which the air passes crosswise, in this case from left to right, by the rotation of the rotor, provided with suitable blades, as is known as such. Ducts 43 and 44 guide the air to and from the fan respectively. The ducts 44 guide the air to blow-in slots 45 and in these slots are spray means 46 of a type as given in Fig. 3. There may also be spray means 47 just to the side of the slots 45, instead of or supplementary to the spray means 46.

If this device is used for spraying trees 17, the casing has lower walls 15 extending towards the trunks of the trees as in Fig. 2. This device may be moved to the right in Fig. 6 or to the left, the latter possibility giving a better result, as stated in principle above. If the slots 41 would also have spray means like 46 and/or 47, and if the fans are reversible, the device may be moved in any direction during spraying, there being switching means for operating only the spray means at the blow-out slots.

If the casing is sufficiently enclosing the trees, flaps as described above may be omitted altogether, the air flow from and into the slots 41 and 45 acting as curtains to shroud the inside of the casing sufficiently from the ambient air.

For higher plants, trees or the like, it may be advisable to give the fans 42 long rotors or to embody them with two or more coaxial rotors, so that the ducts 43 and 44 can be rectangular in side view with substantially horizontal top and bottom walls.

For low crops, a device according to the invention may have a casing with the means shown on one side of the rows of trees in Fig. 6, but turned over 90° to make one of the casing walls 14 of Fig. 6 to form the roof of the casing.

Many parts which are unimportant for the invention have been omitted in the figures, particularly in Figs. 4, 5 and 6, for example drive parts, steering, guide and control means, and in these last figures also stock means for the spray liquid etc. The design of these is no problem for the expert. The device can be drawn or can have its own drive.

In the case of crops in rows or ridges the breadth of the device is selected in such a way that the wheels run in the furrows between ridges, while the device can, of course, also travel with the wheels over the crop where there is a full field crop.

## Claims

1. Mobile device for spraying plants in the field, having, on a carrier device (1) which can be moved through between rows of plants or along a strip of plants, a fan (24, 35, 42), connecting to a pipe system (25, 26, 34, 36, 43, 44) to blow air towards the plants in one or more exits (30, 37, 45) of the pipe system positioned close to spray means (29, 46, 47) for spraying the plants, **characterized in that** the carrier device (1) also carries a tent-shaped casing (11) having a roof (13) and side walls (14) depending therefrom along edges of the roof (13) extending in the direction of travel of the device, which casing (11) covers the plants to be sprayed and substantially shuts off the space inside said casing (11) from the environment, said fan extracting air from the inside of the casing (11) and through the pipe system (25, 26, 34, 36, 43, 44), blowing it back into the casing near the spray means.

2. Device according to Claim 1, in which the pipe system (25, 26) extracts the air from the casing (11) about at the longitudinal centre of the casing as seen between the front and back of the casing in the direction of travel along the plants.

3. Device according to claim 2, in which the fan (24), the spray means (29) and the exits (30, 37, 45) lie approximately in the same plane at right angles to the direction of travel of the device, and the casing (11) extends in said direction of travel in front of and behind said plane.

4. Device according to Claim 1, in which the spray means (29, 46, 47) fand the exits (30, 37, 45) are located nearer to one longitudinal end of the casing (11), as seen between the front and back of the casing in the direction of travel of the device along the plants, the fan (35, 42) extracting air from a zone near the other longitudinal end of the casing (11).

5. Device according to Claim 4, in which the fan (35) and pipe system (34, 36) for guiding the air are positioned above the plants, there being rows of spray means (29) and exits (37) extending in the direction of travel above the plants.

6. Device according to Claim 5, in which an air extracting opening (23) is provided centrally between the sides of the roof part (13) of the casing (11) above the plants, this opening being connected to air ducting (25, 34), which splits downstream of the fan (11, 35) into a number of ducts (25, 26, 36) side by side, each connected to such a row of spray means (29) and exits (30, 37).

7. Device according to Claim 4, in which air extraction openings (41) and exits (45) with spray means (46, 47) extend vertically at each side of the row of plants to be sprayed, there being a fan (42) and air ducting (14, 43, 44) between the air extraction openings (41) and the exits (45) at each side of the tent-shaped casing (11).

8. Device according to Claim 7, in which the fans (42) are cross-flow fans extending with their axes of rotation vertically alongside the tent-shaped casing (11).

9. Device according to any of the preceding claims, in which the spray means (29, 46, 47) comprise nozzles, which are directed in such a way that they can deliver the spray liquid slanting forward, relative to the direction of travel, onto the plants.

10. Device according to any of the preceding claims, in which the spray means include spray nozzles (29), which are adjustable in angular position.

11. Device according to any of the preceding claims, in which the exits (30, 37, 45) are combined with spray nozzles (29, 46) of the spray means, so that the air is delivered along the spray nozzles (29, 46).

12. Device according to Claim 11, in which the exits (30, 45) deliver an air stream on either side of each spray nozzle (29, 46).

13. Device according to Claim 12, in which the exits (30) are adjustable in size and can possibly be shut off (by 31) independently of each other.

14. Device according to any of claims 10 to 13, in which said exits (26) are angularly adjustable with said spray nozzles (29).

15. Device according to any of the preceding claims for spraying trees, in which the casing (11) at both lower edges of its side walls (14) extending longitudinally, as seen in the direction of travel of the device joins a bottom wall (15) extending to the trunk of the tree to be sprayed.

16. Device according to claim 15, in which said bottom wall (15) slants down towards said trunk and ends in a collection channel (16) for liquid spray product.

17. Device according to any of the preceding claims, in which the tent-shaped casing (11) has flaps (18-21) extending substantially transversely to the direction of travel of the device, taking up at least part of the space transverse to the direction of travel of the device between the casing (11) and the plants.

18. Device according to claim 17, in which said flaps (18-21) are disposed multiply one behind the other in different planes transverse to the direction of travel of the device.

19. Device according to claim 17 or 18, in which at least some of said flaps (20) are so large that on the way past they touch the plants to be sprayed and through their flexibility can easily pass them.

**Patentansprüche**

1. Bewegliche Vorrichtung zum Besprühen von Pflanzen auf dem Feld mit einem auf einer Trägervorrichtung (1), die zwischen Pflanzenreihen hindurch oder entlang einen Pflanzenstreifen bewegt werden kann, vorgesehenen Ventilator (24, 35, 42), der mit einem Rohrsystem (25, 26, 34, 36, 43, 44) verbunden ist, so daß Luft zu einem oder mehreren Ausgängen (30, 37, 45) des Rohrsystems, die benachbart zu Sprüheinrichtungen (29, 46, 47) zum Besprühen der Pflanzen angeordnet sind, zu den Pflanzen geblasen wird, **dadurch gekennzeichnet**, daß die Trägervorrichtung (1) außerdem ein zeltförmiges Gehäuse (11) trägt, das ein Dach (13) und Seitenwände (14) hat, die entlang der Kanten des Dachs (13) herabhängen und sich in der Bewegungsrichtung der Vorrichtung erstrecken, wobei das Gehäuse (11) die zu besprühenden Pflanzen abdeckt und den Raum im Innern des Gehäuses (11) von der Umgebung im wesentlichen absperrt, der Ventilator die Luft vom Innern des Gehäuses (11) ansaugt und durch das Rohrsystem (25, 26, 34, 36, 43, 44) zurück in das Gehäuse in die Nähe der Sprüheinrichtungen bläst.

2. Vorrichtung nach Anspruch 1, wobei das Rohrsystem (25, 26) die Luft von dem Gehäuse (11) in Längsrichtung gesehen bezogen auf die Bewegungsrichtung entlang der Pflanzen etwa in der Mitte des Gehäuses zwischen der Vorder- und Rückseite des Gehäuses ansaugt.

3. Vorrichtung nach Anspruch 2, wobei der Ventilator (24), die Sprüheinrichtung (29) und die Ausgänge (30, 37, 45) ungefähr in der gleichen Ebene in rechten Winkeln zur Bewegungsrichtung der Vorrichtung liegen und sich das Gehäuse (11) in der Bewegungsrichtung vor und hinter dieser Ebene erstreckt.

4. Vorrichtung nach Anspruch 1, wobei die Sprüheinrichtung (29, 46, 47) und die Ausgänge (30, 37, 45) näher zu einem Längsende des Gehäuses (11) zwischen der Vorderseite und der Rückseite des Gehäuses in Bewegungsrichtung der Vorrichtung entlang der Pflanzen gesehen, angeordnet sind, der Ventilator (35, 42) Luft von einer Zone in der Nähe des anderen Längsendes des Gehäuses (11) ansaugt.

5. Vorrichtung nach Anspruch 4, wobei der Ventilator (35) und das Rohrsystem (34, 36) zum Leiten der Luft über den Pflanzen angeordnet sind, wobei dort Reihen mit Sprüheinrichtungen (29) und Ausgängen (37) bind, die sich in der Bewegungsrichtung über den Pflanzen erstrecken.

6. Vorrichtung nach Anspruch 5, wobei eine Luftansaugöffnung (23) in der Mitte zwischen den Seiten des Dachteils (13) des Gehäuses (11) über den Pflanzen vorgesehen ist, wobei diese Öffnung mit einer Luftleitung (25, 34) verbunden ist, die sich in Strömungsrichtung nach dem Ventilator (11, 35) in einer Anzahl von Seite an Seite nebeneinander angeordneten Leitungen (25, 26, 36) aufteilt, von denen jede mit einer solchen Reihe von Sprüheinrichtungen (29) und Ausgängen (30, 37) verbunden ist.

7. Vorrichtung nach Anspruch 4, wobei Luftansaugöffnungen (41) und Ausgänge (45) mit Sprüheinrichtungen (46, 47) sich an jeder Seite der zu besprühenden Pflanzenreihen vertikal erstrecken, wobei ein Ventilator (42) und Luftleitungen (14, 43, 44) zwischen den Luftanziehöffnungen (41) und den Ausgängen (45) an jeder Seite des zelt förmigen Gehäuses (11) vorgesehen sind.

8. Vorrichtung nach Anspruch 7, wobei die Ventilatoren (42) Querflußventilatoren sind, deren Drehachsen sich vertikal entlang der Seite des zeltförmigen Gehäuses (11) erstrecken.

9. Vorrichtung nach einem der vorstehenden Ansprüche, wobei die Sprüheinrichtungen (29, 46, 47) Düsen aufweisen, die in solcher Weise gerichtet sind, daß sie die Sprühflüssigkeit in Bezug auf die Bewegungsrichtung schräg nach vorne auf die Pflanzen abgeben können.

10. Vorrichtung nach einem der vorstehenden Ansprüche, wobei die Sprüheinrichtungen Sprühdüsen (29) aufweisen, die in ihrer Winkelstellung einstellbar sind.

11. Vorrichtung nach einem der vorstehenden Ansprüche, wobei die Ausgänge (30, 37, 45) mit Sprühdüsen (29, 46) der Sprüheinrichtungen kombiniert sind, so daß die Luft entlang der Sprühdüsen (29, 46) abgegeben wird.

12. Vorrichtung nach Anspruch 11, wobei die Ausgänge (30, 45) einen Luftstrom auf jeder Seite jeder Sprühdüse (29, 46) abgeben.

13. Vorrichtung nach Anspruch 12, wobei die Ausgänge (30) in ihrer Größe einstellbar sind und sich ggf unabhängig voneinander (durch 31) absperren lassen.

14. Vorrichtung nach einem der Ansprüche 10 bis 13, wobei die Ausgänge (26) mit den Sprühdüsen (29) winkelmäßig einstellbar sind.

15. Vorrichtung nach einem der vorstehenden Ansprüche zum Besprühen von Bäumen, wobei das Gehäuse (11) an beiden Unterkanten seiner sich in Längsrichtung erstreckenden Seitenwände (14) in Bewegungsrichtung der Vorrichtung gesehen mit einer Bodenwand (15) verbunden ist, die sich zu dem Stamm des zu besprühenden Baums erstreckt.

16. Vorrichtung nach Anspruch 15, wobei die Bodenwand (15) in Richtung auf den Stamm nach unten geneigt ist und in einem Sammelkanal (16) für das flüssige Sprühprodukt mündet.

17. Vorrichtung nach einem der vorstehenden Ansprüche, wobei das zeltförmige Gehäuse (11) Klappen (18-21) hat, die sich im wesentlichen quer zur Bewegungsrichtung der Vorrichtung erstrecken und mindestens einen Teil des Raums quer zur Bewegungsrichtung der Vorrichtung zwischen dem Geäuse (11) und den Pflanzen aufnehmen.

18. Vorrichtung nach Anspruch 17, wobei die Klappen (18-21) mehrfach hintereinander in verschiedenen Ebenen quer zur Bewegungsrichtung der Vorrichtung angeordnet sind.

19. Vorrichtung nach Anspruch 17 oder 18, wobei mindestens einige der Klappen (20) so groß sind, daß sie auf dem ezurückzulegenden Weg die zu besprühenden Pflanzen berühren und aufgrund ihrer Flexibilität diese leicht passieren können.

**Revendications**

1. Appareil mobile pour effectuer des pulvérisations sur les plantes dans les champs, comportant, sur un dispositif porteur (1) pouvant circuler entre des rangées de plantes ou le long d'une bande de plantes, un ventilateur (24, 35, 42), relié à un système de tuyaux (25, 26, 34, 36, 43, 44) pour souffler de l'air vers les plantes par un ou plusieurs orifices de sortie (30, 37, 45) du système de tuyaux placés près des moyens de pulvérisation (29, 46, 47) sur les plantes, caractérisé en ce que le dispositif porteur (1) porte également une enveloppe en forme de tente (11) ayant un toit (13) et des parois latérales (14) accrochées le long des bords du toit (13) et s'étendant dans la direction du déplacement de l'appareil, cette enveloppe (11) recouvrant les plantes devant recevoir les pulvérisations et séparant pratiquement l'espace à l'intérieur de cette enveloppe (11) de l'environnement, le ventilateur extrayant l'air de l'intérieur de l'enveloppe (11), et, par le système de tuyaux (25, 26, 34, 36, 43, 44), le soufflant en retour à l'intérieur de l'enveloppe près des moyens de pulvérisation.

2. Appareil conforme à la revendication 1, dans lequel le système de tuyaux (25, 26) extrait l'air de l'enveloppe (11) au voisinage du centre de celle-ci dans le sens de la longueur, si on regarde entre l'avant et l'arrière de l'enveloppe dans la direction de déplacement le long des plantes.

3. Appareil conforme à la revendication 2, dans lequel le ventilateur (24), les moyens de pulvérisation (29) et les orifices de sortie (30, 37, 45) sont placés approximativement dans le même plan perpendiculaire à la direction de déplacement de l'appareil, et dans lequel l'enveloppe (11) s'étend dans ladite direction de déplacement en avant et en arrière dudit plan.

4. Appareil conforme à la revendication 1, dans lequel les moyens de pulvérisation (29, 46, 47) et les orifices de sortie (30, 37, 45) sont placés plus près de l'une des extrémités longitudinales de l'enveloppe (11), si on regarde entre l'avant et l'arrière de l'enveloppe dans la direction de déplacement de l'appareil le long des plantes, le ventilateur (35, 42) extrayant l'air dans une zone située près de l'autre extrémité longitudinale de l'enveloppe (11).

5. Appareil conforme à la revendication 4, dans lequel le ventilateur (35) et le système de tuyaux (34, 36) qui conduisent l'air sont positionnés au-dessus des plantes, des rangées de moyens de pulvérisation (29) et d'orifices de sortie (37) s'étendant dans la direction de déplacement au-dessus des plantes.

6. Appareil conforme à la revendication 5, dans lequel une ouverture (23) d'extraction d'air est prévue au centre entre les côtés de la partie toit (13) de l'enveloppe (11) au-dessus des plantes, cette ouverture étant reliée aux gaines d'air (25, 34) qui se divisent en aval du ventilateur (11, 35) en un certain nombre de conduites (25, 26, 36) qui sont situées l'une à côté de l'autre, et qui sont reliées respectivement à une de ces rangées de moyens de pulvérisation (29) et orifices de sortie (30, 37).

7. Appareil conforme à la revendication 4, dans lequel des ouvertures d'extraction d'air (41) et des orifices de sortie (45) munis de moyens de pulvérisation (46, 47) s'étendent verticalement de chaque côté de la rangée de plantes devant recevoir les pulvérisations, un ventilateur (42) et des gaines d'air (14, 43, 44) étant situés entre les ouvertures d'extraction d'air (41) et les orifices de sortie (45) de chaque côté de l'enveloppe (11) en forme de tente.

8. Appareil conforme à la revendication 7, dans lequel les ventilateurs (42) sont des ventilateurs à flux transversal dont les axes de rotation sont situés verticalement le long de l'enveloppe (11) en forme de tente.

9. Appareil conforme à l'une quelconque des précédentes revendications, dans lequel les moyens de pulvérisation (29, 46, 47) comprennent des buses qui sont dirigées de telle façon qu'elles puissent projeter le liquide de pulvérisation sur les plantes obliquement vers l'avant par rapport à la direction de déplacement.

10. Appareil conforme à l'une quelconque des précédentes revendications, dans lequel les moyens de pulvérisation comprennent des buses de pulvérisation (29) qui sont réglables angulairement.

11. Appareil conforme à l'une des précédentes revendications, dans lequel les orifices de sortie (30, 37, 45) sont combinés avec des buses de pulvérisation (29, 46) des moyens de pulvérisation, de sorte que l'air soit amené le long des buses de pulvérisation (29, 46).

12. Appareil conforme à la revendication 11, dans lequel les orifices de sortie (30, 45) amènent un jet d'air de chaque côté de chacune des buses de pulvérisation (29, 46).

13. Appareil conforme à la revendication 12, dans lequel les orifices de sortie (30) sont réglables en dimension et peuvent possiblement être fermés (par 31) indépendamment les uns des autres.

14. Appareil conforme à l'une quelconque des revendications 10 à 13, dans lequel lesdits orifices de sortie (26) sont réglables angulairement avec lesdites buses de pulvérisation (29).

15. Appareil conforme à l'une quelconque des précédentes revendications, pour pulvériser des arbres, dans lequel l'enveloppe (11) se raccorde, aux deux bords inférieurs de ses parois latérales longitudinales (14), si on regarde dans la direction de déplacement de l'appareil, à une paroi de fond (15) s'étendant jusqu'au tronc de l'arbre devant recevoir les pulvérisations.

16. Appareil conforme à la revendication 15, dans lequel ladite paroi de fond (15) descend obliquement vers ledit tronc et se termine par une rigole de récupération (16) du produit liquide de pulvérisation.

17. Appareil conforme à l'une quelconque des précédentes revendications, dans lequel l'enveloppe (11) en forme de tente possède des cloisons (18 à 21) qui s'étendent pratiquement transversalement par rapport à la direction de déplacement de l'appareil, et qui occupent au moins une partie de l'espace transversal par rapport à la direction de déplacement de l'appareil situé entre l'enveloppe (11) et les plantes.

18. Appareil conforme à la revendication 17, dans lequel les cloisons (18 à 21) sont placées successivement les unes derrière les autres dans différents plans transversaux par rapport à la direction de déplacement de l'appareil.

19. Appareil conforme à l'une des revendications 17 ou 18, dans lequel quelques-unes au moins des cloisons sont suffisamment grandes pour toucher les plantes devant recevoir les pulvérisations lors de leur passage, et pour pouvoir facilement passer devant celles-ci grâce à leur souplesse.

EP 0 357 153 B1

fig-1

fig-3

fig-2

fig-4

fig-5

fig - 6